# EUROPEAN PATENT APPLICATION

(11) **EP 4 763 692 A1**
(43) Date of publication of application: **24.06.2026**
(21) Application number: 25216555.0
(22) Date of filing: 18.11.2025
(51) Int. Cl.: B64C 1/14, B60J 3/04

(54) **DIMMABLE WINDOW SYSTEMS FOR AN AIRCRAFT**

(30) Priority: 19.12.2024 US 202463735968 P; 17.07.2025 US 202519272393
(71) Applicant: The Boeing Company, Arlington, VA 22202 (US)
(72) Inventor: MILLER, Nolan Michael, ARLINGTON, 22202 (US); HILLS, Karen Lee, ARLINGTON, 22202 (US); CALKINS, Frederick T., ARLINGTON, 22202 (US); MITCHELL, Bradley J., ARLINGTON, 22202 (US); SANTACRUZ, David K., ARLINGTON, 22202 (US)
(74) Representative: Plasseraud IP

(57) **Abstract**

A dimmable window system includes a reveal retaining a window, a dimmable member, and an energy harvester configured to harvest energy to provide power to the dimmable member and other components of the dimmable window system. The dimmable window system can be configured for a vehicle, such as an aircraft.

## Description

### CROSS-REFERENCE TO RELATED APPLICATION

This application relates to and claims priority benefits from U.S. Provisional Patent Application No. 63/735,968, filed December 19, 2024, which is hereby incorporated by reference in its entirety.

### FIELD OF THE DISCLOSURE

Examples of the present disclosure generally relate to dimmable window systems for aircraft.

### BACKGROUND OF THE DISCLOSURE

Various aircraft include windows secured to a fuselage. Typically, a window includes a shade, which a passenger can manually grasp to open and close.

As another option, dimmable window systems have been developed The dimmable window systems are controllable to provide a desired dimming to the window. In this manner, a structural shade may not be necessary.

However, the dimmable window systems are typically hardwired into one or more power sources of the aircraft. Accordingly, the dimmable window systems typically require substantial wiring and routing in order to operate. Further, the wiring adds weight to the aircraft, which can reduce fuel efficiency.

### SUMMARY OF THE DISCLOSURE

A need exists for an efficient and effective dimmable window system and method. Further, a need exists for a lighter dimmable window system. Additionally, a need exists for a less complex dimmable window system. Also, a need exists for a less costly dimmable window system. A need also exists for a dimmable window system that can be retrofit into existing vehicles.

The present disclosure provides a dimmable window system for a vehicle as defined by independent claim 1, a method for a dimmable window system as defined by independent claim 13 and a vehicle as defined by independent claim 15 Preferred embodiments are defined in the appended dependent claims.

The dimmable window system includes a reveal retaining a window, a dimmable member, and an energy harvester configured to harvest energy to provide power to the dimmable member.

The energy harvester can be coupled to the reveal. The reveal is configured to secure to a trim ring configured to be secured within an opening formed in a fuselage of the vehicle.

In at least one example, a control unit is configured to control operation of the dimmable window system.

In at least one example, an energy storage device configured to store the energy harvested by the energy harvester.

The energy harvester can include one or more solar cells. The one or more solar cells can be secured to the reveal.

The energy harvester can include a solar panel overlaying one or both of the window or the dimmable member.

A dust cover can be coupled to the reveal. The dimmable member can be coupled to the dust cover. The energy harvester can include a solar film coupled to the dust cover.

The energy harvester can include a thermoelectric generator. The thermoelectric generator can be secured to a crease beam of a fuselage of the vehicle.

The energy harvester can include a vibration harvester. The vibration harvester can include one or more piezoelectric devices.

The dimmable member can include one or more of eletrochromic, suspended particle, polymer dispersed liquid crystal, polymer network liquid crystal, or polarization-based films. The dimmable member can be an electronic dimmable transparent glass or plastic panel or film.

The method includes harvesting energy by the energy harvester, providing power to the dimmable window system via said harvesting.

The vehicle includes a dimmable window system, as described herein.

### BRIEF DESCRIPTION OF THE DRAWINGS

Figure 1 illustrates a perspective front view of an aircraft, according to an example of the present disclosure.
Figure 2 illustrates a perspective interior view of an internal cabin of an aircraft, according to an example of the present disclosure.
Figure 3 illustrates an isometric partial exploded view of a dimmable window system separated from a fuselage, according to an example of the present disclosure.
Figure 4 illustrates an isometric exploded view of the dimmable window system, according to an example of the present disclosure.
Figure 5 illustrates a side view of the dimmable window system, according to an example of the present disclosure.
Figure 6 illustrates a front view of the dimmable window system of Figure 5.
Figure 7 illustrates an isometric front view of the dimmable window system of Figure 5.
Figure 8 illustrates a side view of the dimmable window system, according to an example of the present disclosure.
Figure 9 illustrates a front view of the dimmable window system of Figure 8.
Figure 10 illustrates an isometric front view of the dimmable window system of Figure 8.
Figure 11 illustrates an isometric view of dimmable window systems secured to a fuselage, according to an example of the present disclosure.
Figure 12 illustrates a cross-sectional view of a space between a sidewall and outer fuselage structure of Figure 11.
Figure 13 illustrates a side view of the dimmable window system, according to an example of the present disclosure.
Figure 14 illustrates a front view of the dimmable window system of Figure 13.
Figure 15 illustrates an isometric front view of the dimmable window system of Figure 13.
Figure 16 illustrates a schematic block diagram of a control unit, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide an electronically dimmable window system, which is powered by one or more energy harvesters. In at least one example, the energy harvester, a control unit, and an energy storage system (such as one or more batteries) are integrated into a window reveal assembly, thereby providing a standalone product that can be installed in various types of aircraft. The dimmable window system can be readily retrofit into existing aircraft.

In at least one example, a dimmable window system is configured for a vehicle. The dimmable window system includes a reveal, a dust cover coupled to the reveal, a dimmable member coupled to the dust cover, and an energy harvester coupled to the reveal. The energy harvester is configured to harvest energy to provide power to the dimmable window system.

In at least one example, the dimmable window system further includes a control unit configured to control operation of the dimmable window system. An energy storage device can be configured to store the energy harvested by the energy harvester.

In at least one example, the energy harvester includes one or more solar cells secured to the reveal. As another example, the energy harvester includes a clear solar film coupled to the dust cover. As another example, the energy harvester includes a thermoelectric generator. As another example, the energy harvester includes one or more vibration harvesters.

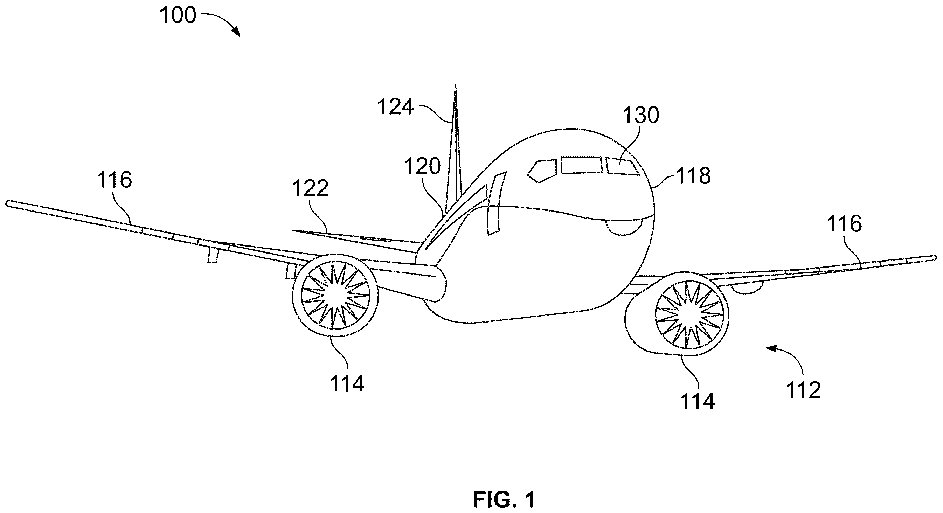

Figure 1 illustrates a perspective front view of an aircraft 100, according to an example of the present disclosure. The aircraft 100 includes a propulsion system 112 that includes engines 114, for example. Optionally, the propulsion system 112 may include more engines 114 than shown. The engines 114 are carried by wings 116 of the aircraft 100. In other examples, the engines 114 may be carried by a fuselage 118 and/or an empennage 120. The empennage 120 may also support horizontal stabilizers 122 and a vertical stabilizer 124.

The fuselage 118 of the aircraft 100 defines an internal cabin 130, which includes a flight deck or cockpit, one or more work sections (for example, galleys, personnel carry-on baggage areas, and the like), one or more passenger sections (for example, first class, business class, and coach sections), one or more lavatories, and/or the like.

Alternatively, instead of an aircraft, examples of the present disclosure may be used with various other vehicles, such as automobiles, buses, locomotives and train cars, watercraft, spacecraft, and the like. As another example, examples of the present disclosure can be used in fixed structures, such as residential or commercial buildings.

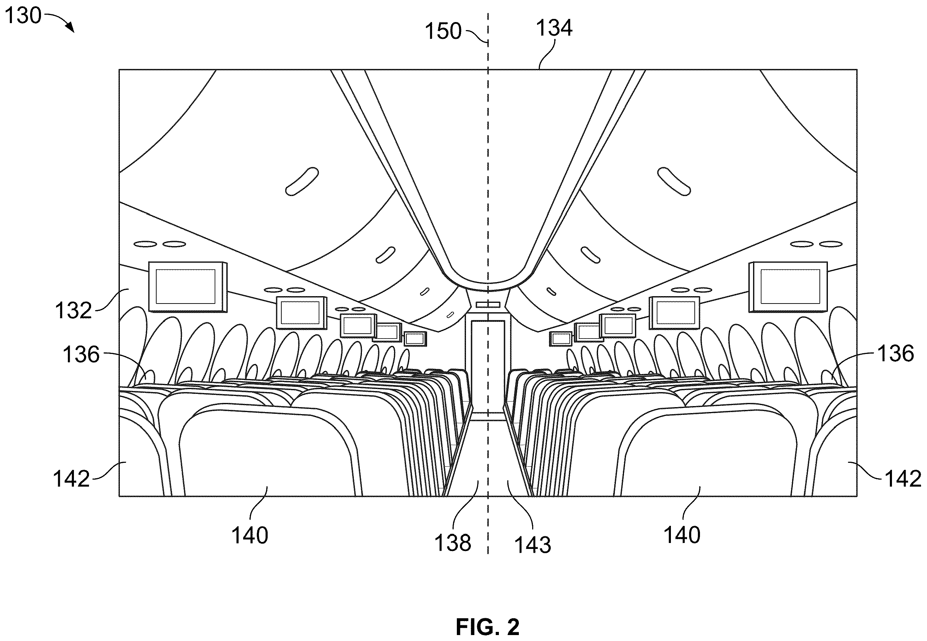

Figure 2 illustrates a perspective interior view of an internal cabin 130 of an aircraft, according to an example of the present disclosure. The internal cabin 130 includes outboard walls 132 and a ceiling 134. Windows 136 may be formed within the outboard walls 132. A floor 138 supports rows of seats 140. As shown in Figure 2, a row 142 may include three seats 140 on either side of an aisle 143. However, the row 142 may include more or less seats 140 than shown. Additionally, the internal cabin 130 may include more aisles than shown.

As used herein, the term "outboard" means a position that is further away from a central longitudinal plane 150 of the internal cabin 130 as compared to another component. The term "inboard" means a position that is closer to the central longitudinal plane 150 of the internal cabin 130 as compared to another component.

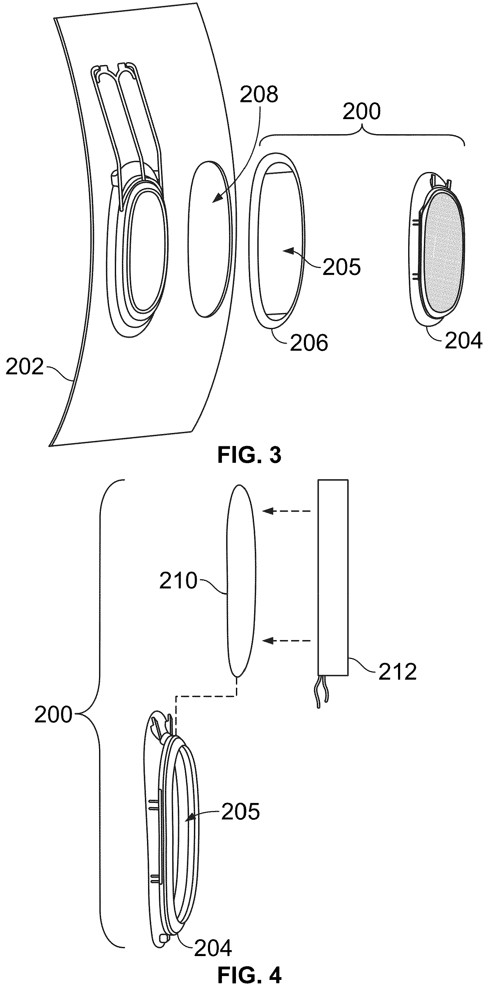

Figure 3 illustrates an isometric partial exploded view of a dimmable window system 200 separated from a fuselage 202, according to an example of the present disclosure. The dimmable window system 200 includes a reveal 204 that secures to a trim ring 206, thereby forming an assembly, which is secured within an opening 208 formed in the fuselage 202. The reveal 204 retains a window 205. Because the dimmable window system 200 is configured to automatically and selectively dim, the dimmable window system 200 may not include a shade track or window shade. Alternatively, the dimmable window system 200 may also include a shade track and window shade.

In at least one example, the reveal 204 is attached to the trim ring 206, which is bonded on a back side of a sidewall of the fuselage 202. One or more latches or clips can be used to secure the assembly to the sidewall.

Figure 4 illustrates an isometric exploded view of the dimmable window system 200, according to an example of the present disclosure. A dust cover 210 is secured to the reveal 204. For example, the dust cover 210 is secured onto and/or over the window 205 secured within the reveal 204. An electronically dimmable member 212 is disposed on the dust cover 210. For example, the dimmable member 212 is attached to side B of the dust cover 210, thereby allowing for easy installation and retrofitting to aircraft. Examples of the dimmable member 212 include eletrochromic, suspended particle, polymer dispersed liquid crystal, polymer network liquid crystal, and polarization-based films.

Optionally, the dimmable window system 200 may not include the dust cover 210. Instead, the dimmable member 212 can be disposed directly onto and/or within the window 205 secured within the reveal 204.

In at least one example, the dimmable member 212 is an electronically dimmable film. As another example, the dimmable member 212 is an electronic dimmable transparent glass or plastic panel.

As noted, the dimmable member 212 is disposed on the dust cover 210. As another example, the dimmable member 212 replaces that dust cover 210. That is, the dimmable window system 200 may not include a separate dust cover.

The dimmable window system 200 further includes an energy harvester, which is configured to harvest energy to power the dimmable member 212. The energy harvester is in communication with an energy storage device (such as one or more batteries), and/or a control unit, such as through a wired or wireless connection. The energy storage device receives harvested energy from the energy harvester, and stores the harvested energy, which is used to power the dimmable window system 200. Optionally, the dimmable window system 200 may not include a separate energy storage device. Instead, the energy harvester can be directly coupled to the control unit and the dimmable member 212 to power the dimmable window system.

The control unit is in communication with the dimmable member 212, such as through a wired or wireless connection. The control unit is configured to operate the dimmable member 212 to selectively dim and undim the dimmable member 212. For example, the dimmable member 212 can be operated via an individual tapping the window at one or more defined locations to increase an opaqueness of the window. Further, the individual can tap the window at one or more defined locations to decrease the opaqueness, and increase transparency. As another example, a user interface including one or more buttons, dials, switches, and the like can be in communication with the control unit, and can be operated by an individual to selectively control the dimmable window system 200. The user interface can be mounted to an interior portion of the reveal 204, the trim ring, the sidewall, or the like.

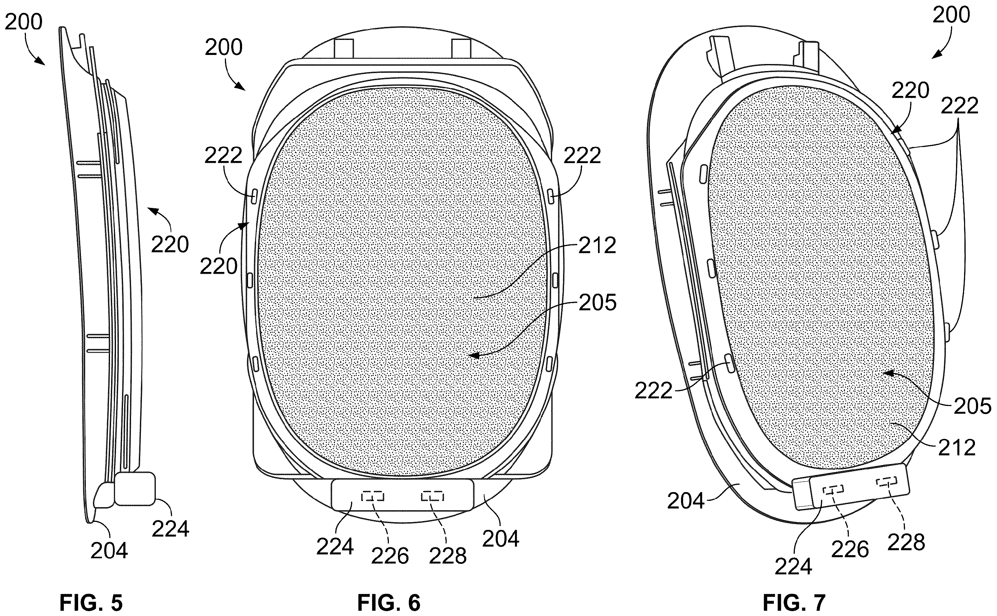

Figure 5 illustrates a side view of the dimmable window system 200, according to an example of the present disclosure. Figure 6 illustrates a front view of the dimmable window system 200 of Figure 5. Figure 7 illustrates an isometric front view of the dimmable window system 200 of Figure 5. Referring to Figures 5-7, the dimmable window system 200 includes the energy harvester 220 secured to the reveal 204. In at least one example, the energy harvester 220 includes one or more solar cells 222 secured to a periphery of the reveal 204 (such as an outboard side of the reveal 204). The solar cells 222 collect solar energy, which is used to power the dimmable window system 200. As such, the dimmable window system 200 is not coupled to another power source of an aircraft.

As shown, a housing 224 can be mounted to or within a portion of the reveal 204. The housing 224 retains the control unit 226 and the energy storage device 228 (for example, one or more batteries). The solar cells 222 are coupled to one or both of the control unit 226 and/or the energy storage device 228. Solar energy collected by the solar cells 222 is stored within the energy storage device 228.

The housing 224 can be disposed on and/or within the reveal 204 at a lower portion below the window 205. Optionally, the housing 224 can be disposed at other locations, such as above the window 205, or to a side of the window 205. As another example, the housing 224 can be separated from the reveal 204, and configured to be secured within a portion of a wall of a fuselage, for example.

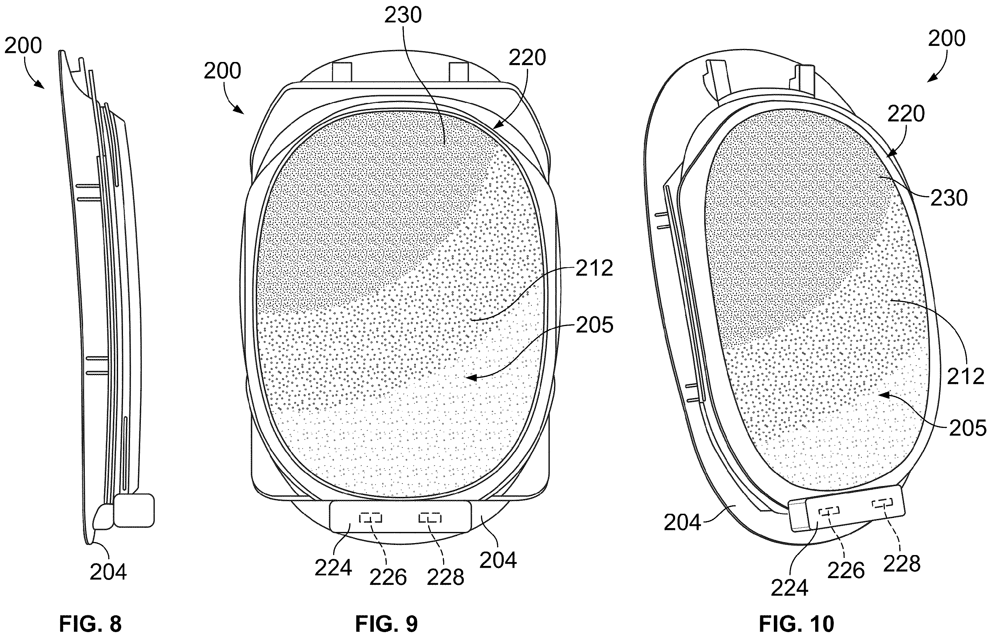

Figure 8 illustrates a side view of the dimmable window system 200, according to an example of the present disclosure. Figure 9 illustrates a front view of the dimmable window system 200 of Figure 8. Figure 10 illustrates an isometric front view of the dimmable window system 200 of Figure 8. Referring to Figures 8-10, in this example, the energy harvester 220 includes a solar panel 230 that overlays the window 205 and/or the dimmable member 212, such as on an outboard side of the dimmable member 212. Clear photovoltaics can be coupled to the dimmable member 212 and/or the dust cover, for example, or non-clear photovoltaics can be disposed in a decorative pattern on the dimmable member 212 and/or the dust cover.

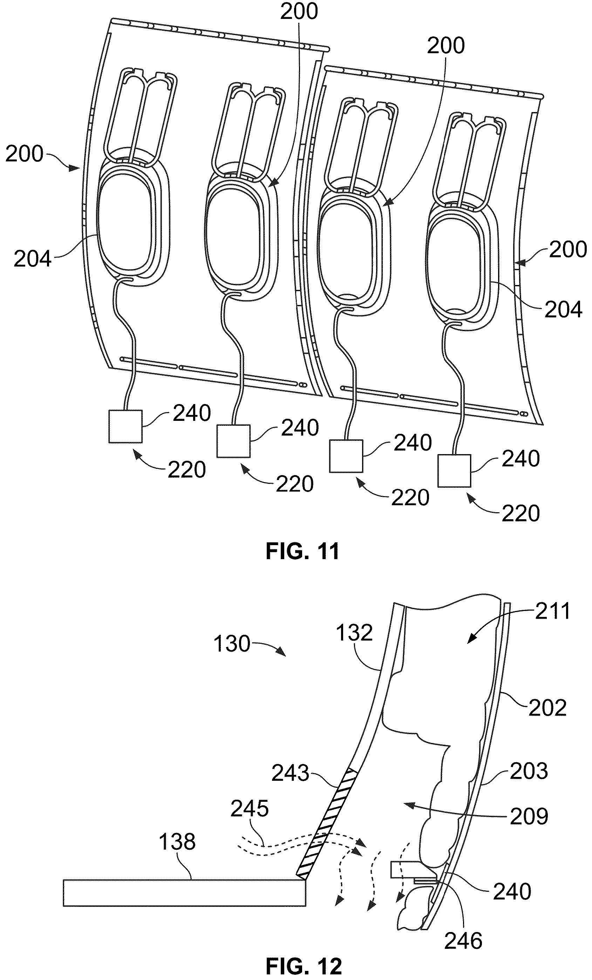

Figure 11 illustrates an isometric view of dimmable window systems 200 secured to a fuselage 202, according to an example of the present disclosure. Figure 12 illustrates a cross-sectional view of a space between a sidewall and outer fuselage structure of Figure 11. As shown in Figure 12, the fuselage 202 includes an outer skin 203. An outboard wall 132 of the internal cabin 130 is separated by a space 209. Insulation 211 can be disposed within the space 209 between the outer skin 203 and the wall 132. An air grill 243 can be disposed above a floor 138 of the internal cabin 130.

Referring to Figures 11 and 12, in this example, the energy harvester 220 includes a thermoelectric generator 240, which can be attached, mounted, or otherwise secured to a crease beam 241, extending inwardly from the outer skin 203, thereby taking advantage of a temperature difference between the relative cold structure of the outer skin 203 of the fuselage and warmer return air 245 within the internal cabin 130.

In at least one example, the thermoelectric generator 240 is wired to the reveal 204. After the reveal 204 is installed, the thermoelectric generator 240 can be dropped down within the space 209. The air grill 243 is then opened to allow for mounting of the thermoelectric generator 240 to the crease beam 241.

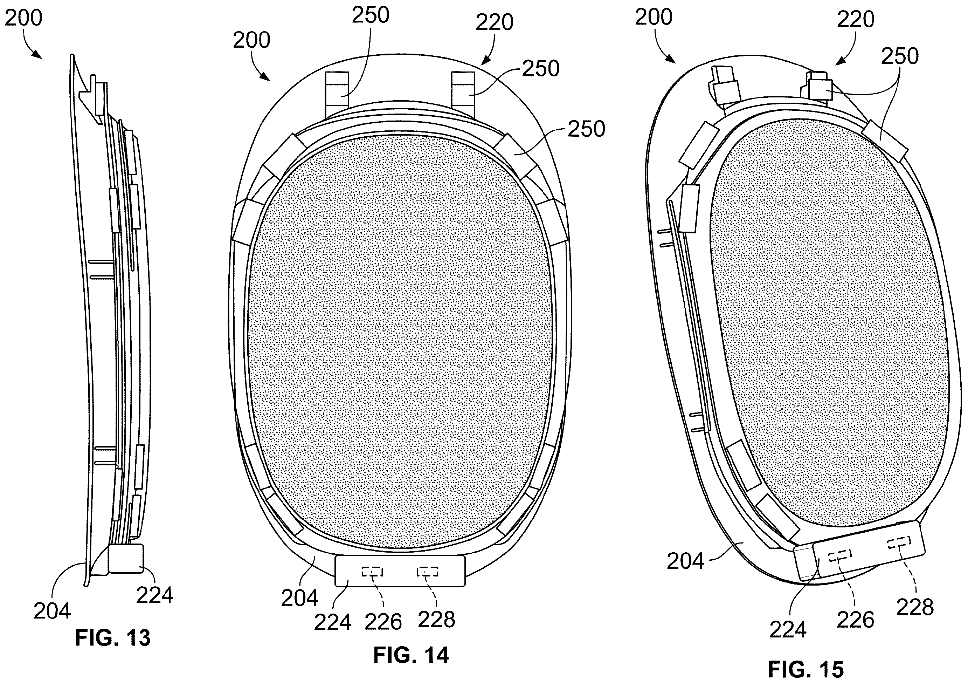

Figure 13 illustrates a side view of the dimmable window system 200, according to an example of the present disclosure. Figure 14 illustrates a front view of the dimmable window system 200 of Figure 13. Figure 15 illustrates an isometric front view of the dimmable window system 200 of Figure 13. Referring to Figures 13-15, in this example, the energy harvester 220 includes one or more vibration harvesters 250 secured to a periphery of the reveal 204. The vibration harvesters 250 can be attached anywhere on an outboard facing side of the reveal 204. As an example, the vibration harvesters 250 are piezoelectric devices that convert vibration energy into energy that is used to power the dimmable window system 200.

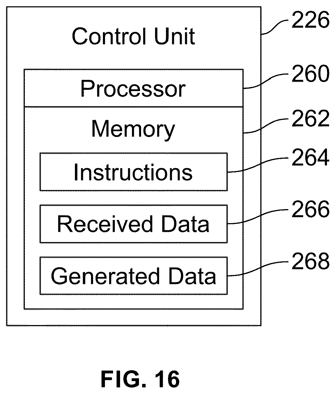

Figure 16 illustrates a schematic block diagram of the control unit 226, according to an example of the present disclosure. In at least one example, the control unit 226 includes at least one processor 260 in communication with a memory 262. The memory 262 stores instructions 264, received data 266, and generated data 268. The control unit 226 shown in Figure 16 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), field programmable gate arrays (FPGAs), logic circuits, and any other circuit or processor including hardware, software, or a combination thereof capable of executing the functions described herein. Such are exemplary only, and are thus not intended to limit in any way the definition and/or meaning of such terms. For example, the control unit 226 may be or include one or more processors that are configured to control operation, as described herein.

The control unit 226 is configured to execute a set of instructions that are stored in one or more data storage units or elements (such as one or more memories), in order to process data. For example, the control unit 226 may include or be coupled to one or more memories. The data storage units may also store data or other information as desired or needed. The data storage units may be in the form of an information source or a physical memory element within a processing machine.

The set of instructions may include various commands that instruct the control unit 226 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 226. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 226 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-16, the dimmable window systems can be installed on new vehicles (for example, aircraft), or retrofit into existing vehicles. The dimmable window systems include their own power sources (namely, the energy harvester), and therefore need not be coupled to a power source of the aircraft, thereby allowing for easy installation, and reducing weight of the aircraft (as additional wiring is not used to connect to a power source of the aircraft).

In at least one example, the dimmable window systems 200 are powered to a dark, dimmed state. If power is interrupted, the dimmable window systems revert to a clear, transparent state.

In at least one example, the energy harvester can include solar cells, a solar film, a thermoelectric generator, vibration harvester(s), and/or the like. For example, the energy harvester can include one or more solar cells, a solar film, a thermoelectric generator, and one or more vibration harvesters.

Further, the disclosure comprises examples according to the following clauses:
Clause 1. A dimmable window system for a vehicle, the dimmable window system comprising:
   a reveal retaining a window;
   a dimmable member; and
   an energy harvester configured to harvest energy to provide power to the dimmable member.
Clause 2. The dimmable window system of Clause 1, wherein the energy harvester is coupled to the reveal.
Clause 3. The dimmable window system of Clauses 1 or 2, wherein the reveal is configured to secure to a trim ring configured to be secured within an opening formed in a fuselage of the vehicle.
Clause 4. The dimmable window system of any of Clauses 1-3, further comprising a control unit configured to control operation of the dimmable window system.
Clause 5. The dimmable window system of any of Clauses 1-4, further comprising an energy storage device configured to store the energy harvested by the energy harvester.
Clause 6. The dimmable window system of any of Clauses 1-5, wherein the energy harvester comprises one or more solar cells.
Clause 7. The dimmable window system of Clause 6, wherein the one or more solar cells are secured to the reveal.
Clause 8. The dimmable window system of any of Clauses 1-7, wherein the energy harvester comprises a solar panel overlaying one or both of the window or the dimmable member.
Clause 9. The dimmable window system of any of Clauses 1-8, further comprising a dust cover coupled to the reveal, wherein the dimmable member is coupled to the dust cover.
Clause 10. The dimmable window system of Clause 9, wherein the energy harvester comprises a solar film coupled to the dust cover.
Clause 11. The dimmable window system of any of Clauses 1-10, wherein the energy harvester comprises a thermoelectric generator.
Clause 12. The dimmable window system of Clause 11, wherein the thermoelectric generator is secured to a crease beam of a fuselage of the vehicle.
Clause 13. The dimmable window system of any of Clauses 1-12, wherein the energy harvester comprises a vibration harvester.
Clause 14. The dimmable window system of Clause 13, wherein the vibration harvester comprises one or more piezoelectric devices.
Clause 15. The dimmable window system of any of Clauses 1-14, wherein the dimmable member comprises one or more of eletrochromic, suspended particle, polymer dispersed liquid crystal, polymer network liquid crystal, or polarization-based films.
Clause 16. The dimmable window system of any of Clauses 1-15, wherein the dimmable member is an electronic dimmable transparent glass or plastic panel.
Clause 17. A method for a dimmable window system for a vehicle, the dimmable window system comprising:
   a reveal retaining a window;
   a dimmable member; and
   an energy harvester configured to harvest energy to provide power to the dimmable member,
   the method comprising:
      harvesting energy by the energy harvester; and
      providing power to the dimmable member via said harvesting.
Clause 18. The method of Clause 17, further comprising securing the energy harvester to a crease beam of a fuselage of the vehicle.
Clause 19. A vehicle comprising:
   a fuselage defining an opening;
   a dimmable window system secured within at least a portion of the opening, the dimmable window system comprising:
      a reveal retaining a window, wherein the reveal is secured to a trim ring secured within the opening;
      a dimmable member;
      a control unit configured to control operation of the dimmable window system;
      an energy harvester coupled to the reveal, wherein the energy harvester is configured to harvest energy to provide power to the dimmable member and the control unit; and
      an energy storage device configured to store the energy harvested by the energy harvester.
Clause 20. The vehicle of Clause 19, wherein the energy harvester comprises one or more of:
   one or more solar cells;
   a solar panel overlaying one or both of the window or the dimmable member;
   a solar film coupled to a dust cover;
   a thermoelectric generator; and
   a vibration harvester.

As described herein, examples of the present disclosure provide efficient and effective dimmable window systems and methods. Further, examples of the present disclosure provide lighter, compact dimmable window systems. Additionally, examples of the present disclosure provide simpler, less complex dimmable window systems. Also, examples of the present disclosure provide cost-effective dimmable window systems.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A dimmable window system (200) for a vehicle, the dimmable window system comprising:
a reveal (204) retaining a window (205);
a dimmable member (212); and
an energy harvester (220) configured to harvest energy to provide power to the dimmable member.

2. The dimmable window system of claim 1, wherein the energy harvester is coupled to the reveal.

3. The dimmable window system of claim 1 or 2, wherein the reveal is configured to secure to a trim ring (206) configured to be secured within an opening formed in a fuselage (202) of the vehicle.

4. The dimmable window system of any one of claims 1 to 3, further comprising a control unit (226) configured to control operation of the dimmable window system.

5. The dimmable window system of any one of claims 1 to 4, further comprising an energy storage device (228) configured to store the energy harvested by the energy harvester.

6. The dimmable window system of any one of claims 1 to 5, wherein the energy harvester comprises one or more solar cells (222).

7. The dimmable window system of any one of claims 1 to 6, wherein the energy harvester comprises a solar panel overlaying one or both of the window (205) or the dimmable member.

8. The dimmable window system of any one of claims 1 to 7, further comprising a dust cover (210) coupled to the reveal, wherein the dimmable member is coupled to the dust cover.

9. The dimmable window system of any one of claims 1 to 5, wherein the energy harvester comprises a thermoelectric generator (240) and/or a vibration harvester (250).

10. The dimmable window system of any one of claims 1 to 9, wherein when the energy harvester comprises the thermoelectric generator (240), the thermoelectric generator is secured to a crease beam of a fuselage (202) of the vehicle.

11. The dimmable window system of any one of claims 1 to 10, wherein when the energy harvester comprises the vibration harvester (250), the vibration harvester comprises one or more piezoelectric devices.

12. The dimmable window system of any one of claims 1 to 11, wherein the dimmable member comprises one or more of eletrochromic, suspended particle, polymer dispersed liquid crystal, polymer network liquid crystal, or polarization-based films.

13. A method for a dimmable window system (200) for a vehicle, the dimmable window system comprising:
a reveal (204) retaining a window (205);
a dimmable member (212); and
an energy harvester (220) configured to harvest energy to provide power to the dimmable member,
the method comprising:
harvesting energy by the energy harvester; and
providing power to the dimmable member via said harvesting.

14. The method of claim 13, further comprising securing the energy harvester to a crease beam of a fuselage (202) of the vehicle.

15. A vehicle comprising:
a fuselage (202) defining an opening;
a dimmable window system (200) secured within at least a portion of the opening, the dimmable window system comprising:
a reveal (204) retaining a window, wherein the reveal is secured to a trim ring (206) secured within the opening;
a dimmable member (212);
a control unit (226) configured to control operation of the dimmable window system;
an energy harvester (220) coupled to the reveal, wherein the energy harvester is configured to harvest energy to provide power to the dimmable member and the control unit; and
an energy storage device (228) configured to store the energy harvested by the energy harvester.
